# EUROPEAN PATENT APPLICATION

(11) **EP 4 831 018 A1**
(43) Date of publication of application: **28.10.2026**
(21) Application number: 26172448.8
(22) Date of filing: 15.04.2026
(51) Int. Cl.: B60T 5/00

(54) **WHEEL HEAT SHIELDS**

(30) Priority: 21.04.2025 IN 202511038123; 05.05.2025 US 202519198962
(71) Applicant: Honeywell International Inc., Charlotte, NC 28202 (US)
(72) Inventor: R, Mariappan, Charlotte, 28202 (US); DEY, Pradeep Kumar, Charlotte, 28202 (US); KHATEI, Brajamohan, Charlotte, 28202 (US); . Prajwal, Charlotte, 28202 (US); RAMADOSS, Muthukrishnan, Charlotte, 28202 (US); PARSONS, Abigail, Charlotte, 28202 (US)
(74) Representative: Haseltine Lake Kempner LLP

(57) **Abstract**

A wheel heat shield may include an inner wall extending along a longitudinal axis of the wheel heat shield, an outer wall radially spaced from the inner wall, and a plurality of pedestals extending radially between the inner wall and the outer wall. At least one pedestal of the plurality of pedestals defines a cruciform cross-section along a plane transverse to the longitudinal axis. An assembly may include a wheel and the wheel heat shield secured to an interior surface of the wheel. A technique may include additively depositing the heat-resistant material to form the wheel heat shield.

## Description

### CROSS-REFERENCE TO RELATED APPLICATIONS

The present application claims the benefit of Indian Provisional Application No. 202511038123, filed April 21, 2025, which is incorporated herein by reference in entirety.

### TECHNICAL FIELD

The present disclosure relates to wheel heat shields.

### BACKGROUND

Vehicles, such as aircrafts, may use a wheel brake system that includes a multi-disc brake assembly. For example, the multi-disc brake assembly may include a plurality of rotors engaged with a wheel and a plurality of stators interleaved with the rotors. The rotors and wheel are configured to rotate around an axle, while the stators remain rotationally stationary. To decelerate rotational motion of a rotating wheel, the brake assembly may displace pistons against a pressure plate to squeeze the rotating rotors attached to the wheel against the stationary stators, therefore producing torque that decelerates the rotational motion of the wheel. This process generates heat within the rotors and the stators.

Wheel assemblies in transportation may be exposed to heat. For example, braking assemblies may generate heat in course of operation, for example, arising from friction. Further, brakes may remain at elevated temperatures and require significant time to cool after landing. Such heat may be transferred to wheels, which may further increase wheel temperature.

### SUMMARY

In general, the disclosure describes wheel heat shields, assemblies including wheel heat shields, and techniques for forming wheel heat shields. Wheel heat shields are configured to resist heat transfer toward a wheel, for example, from a brake assembly. Thus, wheel heat shields may prevent or reduce heating to wheels or tires to temperatures that could compromise their structural integrity or performance. In some examples, wheel heat shields according to the present disclosure may be fabricated by additive manufacturing. In some examples, wheel heat shields include an inner wall and an outer wall, and a plurality of pedestals between the inner wall and the outer wall. The plurality of pedestals may be arranged in a lattice between the inner wall and the outer wall. Heat transfer across the wheel heat shields is reduced because the pedestals space apart the inner wall and the outer wall. Thus, a gap is maintained between the inner wall and the outer wall by the plurality of pedestals. Moreover, the plurality of pedestals has a relatively small footprint, and thus heat transfer by conduction across the plurality of pedestals itself is relatively low. The gap and the relatively low conductive transfer promote an overall thermal insulation exhibited by the wheel heat shields.

In some examples, an example wheel heat shield includes an inner wall extending along a longitudinal axis of the wheel heat shield. The wheel heat shield further includes an outer wall radially spaced from the inner wall, and a plurality of pedestals extending radially between the inner wall and the outer wall. At least one pedestal of the plurality of pedestals defines a cruciform cross-section along a plane transverse to the longitudinal axis.

In some examples, an example assembly includes a wheel and a wheel heat shield. The wheel defines an interior surface and an exterior rim configured to receive a tire. The wheel heat shield is secured to the interior surface. The wheel heat shield includes an inner wall extending along a longitudinal axis of the wheel heat shield, an outer wall radially spaced from the inner wall, and a plurality of pedestals extending radially between the inner wall and the outer wall. At least one pedestal of the plurality of pedestals defines a cruciform cross-section along a plane transverse to the longitudinal axis.

In some examples, an example technique includes additively depositing a heat-resistant material to form a wheel heat shield. The wheel heat shield includes an inner wall extending along a longitudinal axis of the wheel heat shield, an outer wall radially spaced from the inner wall, and a plurality of pedestals extending radially between the inner wall and the outer wall. At least one pedestal of the plurality of pedestals defines a cruciform cross-section along a plane transverse to the longitudinal axis.

The details of one or more examples are set forth in the accompanying drawings and the description below. Other features, objects, and advantages will be apparent from the description and drawings, and from the claims.

### BRIEF DESCRIPTION OF THE FIGURES

FIG. 1A is perspective view illustrating an example wheel heat shield including a plurality of pedestals.
FIG. 1B is a partial interior sectional view of the wheel heat shield of FIG. 1A.
FIG. 1C is a perspective view of an example pair of pedestals of the plurality of pedestals of FIG. 1A.
FIG. 2 is a side view of an example pedestal including a notched end.
FIG. 3 is a front view of an example heat shield segment including a plurality of hinges.
FIG. 4 is a partial front view of an example heat shield segment including an embossed boss.
FIG. 5 is a partial top view of an example heat shield segment including a fileted transition.
FIG. 6 is a perspective view illustrating an example wheel including a plurality of rotor drive keys on an interior surface of the wheel.
FIG. 7 is a schematic cross-sectional view of an example wheel and brake assembly including the wheel of FIG. 6.
FIG. 8 is a block diagram illustrating an example system for additively manufacturing a wheel heat shield.
FIG. 9 is a flow diagram illustrating an example technique for forming a wheel heat shield.

### DETAILED DESCRIPTION

In general, the disclosure describes wheel heat shields, assemblies including wheel heat shields, and techniques for forming wheel heat shields. A wheel heat shield is positioned between a wheel and a heat-generating component (e.g., a brake assembly). The wheel heat shield is configured to resist heat generated by operation of the brake assembly (e.g., by frictional contact) from being transferred to the wheel. In some examples, the wheel heat shield may be positioned about a wheel cavity radially inward of a rim, and radially outward of the brake assembly.

In some examples, a wheel heat shield includes an inner wall extending along a longitudinal axis of the wheel heat shield, an outer wall radially spaced from the inner wall, and a plurality of pedestals extending between the inner wall and the outer wall. At least one pedestal of the plurality of pedestals defines a cruciform cross-section along a plane transverse to the longitudinal axis. The plurality of pedestals may provide mechanical support to space apart the radially inner surface from the radially outer surface, while defining passages between the radially inner surface and the radially outer surface, which may provide an insulative gap without requiring insulating material. Thus, the wheel heat shield may resist flow of heat generated by the brake assembly to the rim, or to a tire mounted on the rim.

Wheel heat shield manufacture may be complex and labor-intensive, for example, requiring alignment and placement of insulating material (e.g., fibers, batting, foam, fabric, or non-woven material) between shield walls, and coupling of inner and outer shield walls to form heat shield segments. In particular, coupling of the inner and outer shield walls may be relatively expensive. In some examples according to the present disclosure, the wheel heat shield may not include insulating material in an interior of the wheel heat shield. For example, the plurality of pedestals maintains a gap between the shield walls, and the gap resists heat transfer through the shield walls. Thus, the plurality of pedestals may result in reduced heat transfer from the brake assembly toward the wheel even, when little to no insulating material is present in an interior of the wheel heat shield (e.g., between the shield walls). Moreover, the cross-section of the plurality of pedestals (e.g., cruciform) results in a relatively smaller footprint, which deters conductive heat transfer between the shield walls along the plurality of pedestals itself. Without being bound by theory, pedestals having a cruciform cross-section may exhibit a better structural strength compared to other cross-sections such as V-shaped cross-sections, T-shaped cross-sections, or H-shaped cross-sections. In some examples, the plurality of pedestals may include twin pedestal pairs, which may further promote structural support and integrity of wheel heat shields as compared to singular pedestals.

The plurality of pedestals may be arranged in predetermined patterns to distribute thermal and structural load relatively uniformly along the wheel heat shield. Without being bound by theory, a staggered or hexagonal array of the plurality of pedestals may exhibit a better load distribution as compared to linear arrays or aligned linear distributions of the plurality of pedestals (e.g., pedestals arranged in straight lines, or in a square grid).

Wheel heat shields according to the present disclosure may be fabricated in segments by additive manufacturing techniques, reducing the complexity of assembly, and reducing labor required to assemble components of wheel heat shields. The configuration of the plurality of pedestals (e.g., having cruciform cross-section) may allow additive manufacturing of wheel heat shields or heat shield segments without requiring the use of support structures. The cross-section may also reduce overall weight of the pedestals (e.g., as compared to pedestals having a relatively greater ratio of cross-sectional area to contour length). Additive manufacturing may also allow shapes and configurations of wheel heat shields or heat shield segments that are specific to certain applications or boundary conditions, compared to using standard sheet metal for all applications or boundary conditions.

For example, using additive manufacturing to fabricate wheel heat shields may reduce costs and weight, because heat shield segments or entire shields may be printed as unitary pieces, removing the need for metal work operations such as forming, welding, or riveting. Including the plurality of pedestals may provide a better thermal shielding performance compared to heat shields that do not include pedestals. The plurality of pedestals may also promote structural integrity by resisting compressive forces exerted on the shield walls, while securing the shield walls to each other.

In some examples, wheel heat shields according to the present disclosure may optionally further include one or more of embossed bosses, curved or fileted transitions or edges, hinges, or locking mechanisms to promote the structural integrity and/or simplify assembly. For example, embossed bosses may allow stacking of wheel heat shields or heat shield segments during manufacturing, storage, transport, or assembly, while spacing apart neighboring external surfaces. Curved or fileted transitions or edges may reduce structural stresses and promote uniform thermal effects.

Wheel heat shields according to the present disclosure may thus prevent or reduce transfer of heat from brake assemblies to wheels or tires, which in turn promotes structural integrity and performance of wheels and tires.

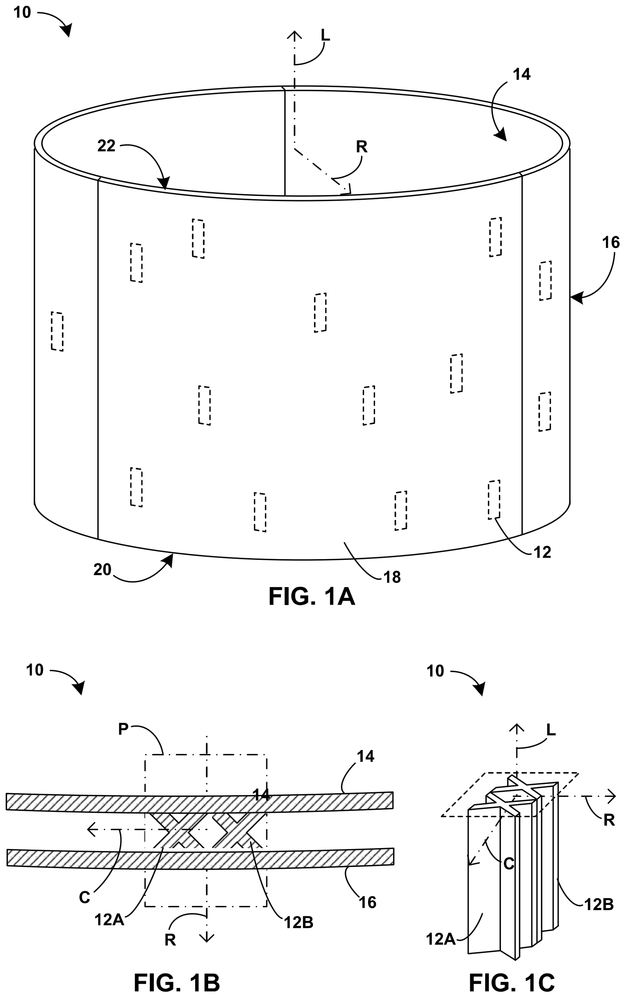

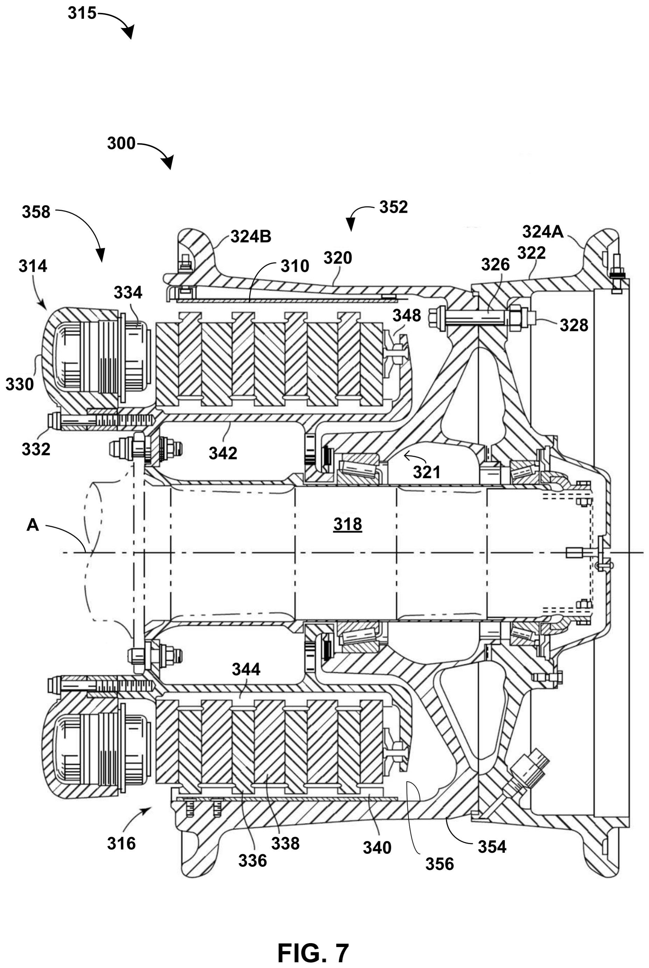

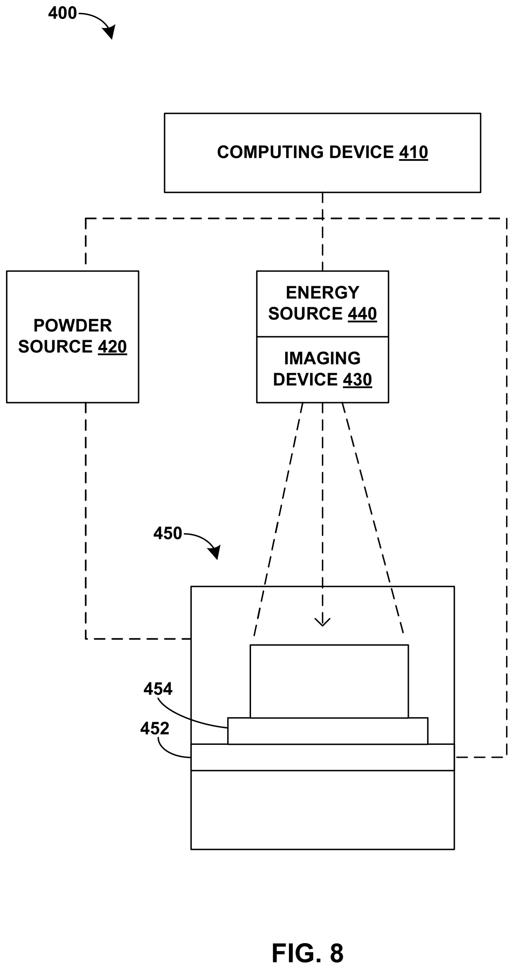

FIG. 1A is perspective view illustrating an example wheel heat shield 10 including a plurality of pedestals 12. Wheel heat shield 10 is configured to be secured to a wheel assembly (for example, as described with reference to FIGS. 7 and 8), and to act as a thermal barrier between a wheel or a tire of the wheel assembly, and a heat-generating component, for example, a brake assembly. Wheel heat shield 10 includes an inner wall 14 extending along a longitudinal axis L of wheel heat shield 10. The wheel heat shield further includes an outer wall 16 radially spaced from inner wall 14. Plurality of pedestals 12 extends radially (e.g., along a radial axis R relative to longitudinal axis L) between inner wall 14 and outer wall 16. Plurality of pedestals 12 is configured to resist heat transfer across the wheel heat shield 10 by spacing apart inner wall 14 and outer wall 16 of wheel heat shield 10 (e.g., spacing apart radially along radial axis R).

Wheel heat shield 10 may have any suitable shape configured to be received in or secured to a wheel assembly. In some examples, wheel heat shield 10 has a generally cylindrical shape. Wheel heat shield 10 may be unitary, for example, including a single-piece body. In some examples, as shown in FIG. 1A, wheel heat shield 10 includes at least one heat shield segment 18 extending along longitudinal axis L between an outboard end 20 and an inboard end 22. Wheel heat shield 10 may be configured to be secured to a wheel assembly, for example, with outboard end 20 pointing in an outboard direction relative to the wheel assembly, and with inboard end 22 pointing in an inboard direction relative to the wheel assembly. However, outboard end 20 may or may not extend substantially to or adjacent to an outboard end of the wheel assembly, and inboard end 22 may or may not extend substantially to or adjacent to an inboard end of the wheel assembly.

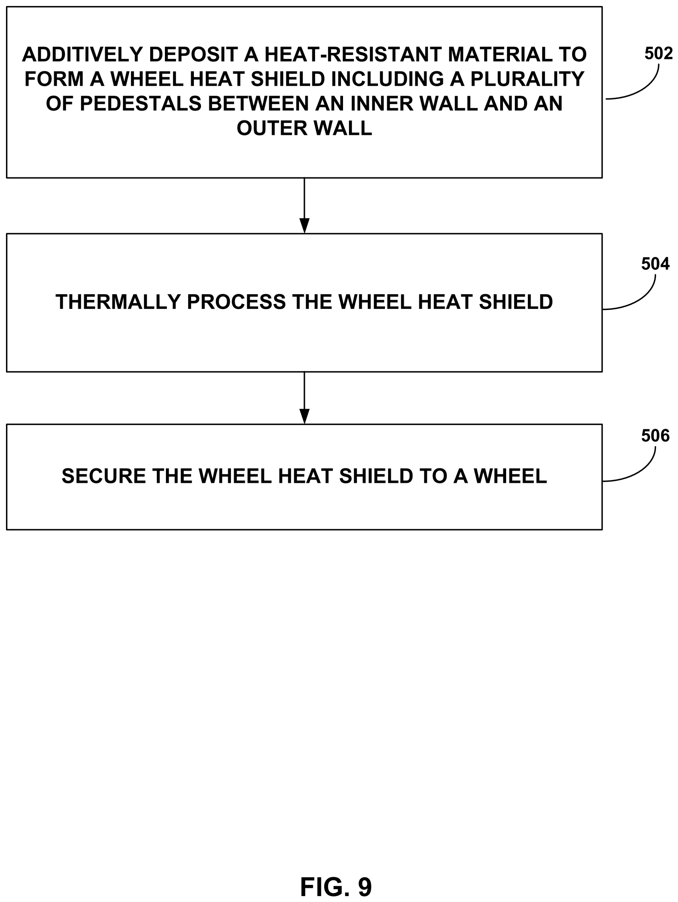

The plurality of petals 12 or the at least one heat shield segment 18 may respectively include any suitable same or different composition, for example, at least one of a metal, an alloy, or a ceramic. The composition may be cast, stamped, molded, or formed using any suitable technique. In some examples, the composition is additively deposited. For example, as described below in FIGS. 8 and 9, additive manufacturing processes may involve sequential deposition of layers that results in a microstructure particular to additive manufacturing. Without being bound by theory, due to steep thermal gradients and rapid solidification rates in additive manufacturing, grains tend to grow epitaxially from the melt pool boundaries in the build direction, which may result in elongated, columnar grains, particularly in the build direction. As another example, due to layer by layer fabrication, a composition that is additively deposited may include melt pool boundaries, sintering lines or zones, or layer lines visible in both macrostructure and microstructure.

In some examples, the alloy includes a steel (e.g., stainless steel) or a titanium alloy. In some examples, the composition includes at least one of alumina, zirconia, aluminum nitride, silicon carbide, or silicon nitride. The composition may be sintered, for example, thermally sintered. In some examples, wheel heat shield 10 may include a preform configured to be thermally treated, for example, to remove a binder or a solvent, or to cause bonding, sintering, or diffusion of one or more component of the composition.

In the example shown in FIG. 1A, wheel heat shield 10 includes three heat shield segments 18. However, in other examples, wheel heat shield 10 may include a single segment, two segments, or more than three segments. The segments may extend in a circumferential direction (relative to longitudinal axis L) along a circular path, a curved path, a line, or any suitable path. In some examples, each segment of wheel heat shield 10 extends along a circular arc, and wheel heat shield 10 is substantially cylindrical. At least one heat shield segment 18 may define at least a portion of each of inner wall 14 and outer wall 16. The spacing apart of inner wall 14 from outer wall 16 may reduce or prevent flow of heat in a radial direction (for example, from inner wall 14 toward outer wall 16).

FIG. 1B is a partial cross-sectional view of wheel heat shield 10 of FIG. 1A. FIG. 1C is a perspective view of an example pair of pedestals of the plurality of pedestals of FIG. 1A. As seen in FIGS. 1B and 1C, at least one pedestal 12A of plurality of pedestals 12 defines a cruciform cross-section along a plane P transverse to the longitudinal axis. The cruciform cross-section may be oriented at any angle relative to radial axis R. For example, the cruciform cross-section may include four arms, and two arms may be aligned with radial axis R and two arms may be inclined relative to radial axis R (along plane P). In other examples, as shown in FIG. 1B, each arm of the cruciform cross-section is inclined relative to radial axis R along plane P. For example, each arm of the cruciform cross-section may be inclined at an angle of 45° relative to radial axis R along plane P.

As seen in FIG. 1C, in some examples, at least one pedestal (e.g., pedestal 12A or pedestal 12B) of plurality of pedestals 12 extends longitudinally in a direction parallel to longitudinal axis L of inner wall 14. In some such examples, each pedestal of plurality of pedestals 12 extends longitudinally in a direction parallel to longitudinal axis L of inner wall 14. In other examples, at least one pedestal of plurality of pedestals 12 extends longitudinally at an inclined angle relative to longitudinal axis L (e.g., along radial axis R, circumferential axis C, or some other inclined angle in space). The inclined angle may be any suitable angle, for example, in a range of -90 to +90°, relative to longitudinal axis L.

In some examples, plurality of pedestals 12 includes at least one twin pedestal pair of pedestals 12A and 12B. For example, pedestals 12A and 12B of the twin pedestal pair may abut each other, or be closer to each other than to other pedestals of plurality of pedestals 12. In some examples, pedestals 12A and 12B of the twin pedestal pair abut each other in a circumferential direction C relative to radial axis R and longitudinal axis L. In some examples, each pedestal of plurality of pedestals 12 is a member of a respective pair of pedestals. The shape of each pedestal or of the overall configuration of the pair of pedestals may facilitate removal of unused or residual manufacturing material, e.g., residual powder remaining after an additive manufacturing process. Pedestals 12A and 12B of the twin pedestal pair may be identical or differ in one or more of size, shape, or orientation. In some examples, plurality of pedestals 12 consists of identical twin pedestal pairs (i.e., each pedestal of plurality of pedestals 12 is a member of a twin pedestal pair). In some examples, each pedestal of the identical twin pedestal pairs has a height (along longitudinal axis L) in a range of from 5 mm to 15 mm (e.g. 10.0 mm), a width (along circumferential axis C) in a range of from 2 mm to 5 mm (e.g., 2.6 mm), and a thickness (along radial axis R) in a range of from 2 mm to 5 mm (e.g., 2.3 mm).

Plurality of pedestals 12 may be distributed substantially uniformly along at least one of a first direction along longitudinal axis L or a second direction along circumferential axis C. For example, plurality of pedestals 12 may be distributed in a grid, hexagonal array, or randomly distributed with a predetermined average inter-pedestal distance. In some examples, the plurality of pedestals 12 is staggered along inner wall 14. For example, respective pedestals of plurality of pedestals 12 may be arranged at positions that zig-zag along a path, or are arranged in a triangular or hexagonal array.

In some examples, at least one pedestal of plurality of pedestals 12 defines a hollow pedestal interior. A hollow pedestal interior may promote thermal insulation, and may reduce flow of heat between inner wall 14 and outer wall 16 through plurality of pedestals 12 (for example, via conductive heat transfer). In some examples, a majority, or substantially all, of plurality of pedestals 12 define respective hollow pedestal interiors. However, in other examples, one, more than one, a majority, or substantially all, of plurality of pedestals 12 may define solid pedestal interiors. A solid pedestal interior may promote a structural integrity of a respective pedal, e.g., by resisting compression of the respective pedal.

In some examples, plurality of pedestals 12 integrally extends between inner wall 14 and outer wall 16, such that plurality of pedestals 12, inner wall 14, and outer wall 16 are unitary with each other (at least in at least one heat shield segment 18). In some such examples, at least one heat shield segment 18 includes a unitary body. For example, each portion of at least one heat shield segment 18 is integral and continuous with other portions of at least one heat shield segment 18 (e.g., with plurality of pedestals 12). In some examples, each heat shield segment 18 of wheel heat shield 10 includes a unitary body.

While at least one pedestal of plurality of pedestals 12 has a cruciform cross-section, at least one other pedestal of plurality of pedestals 12 may have a different cross-sectional geometry (e.g., other than a cruciform). For example, the at least one other pedestal of plurality of pedestals 12 may have any suitable pedestal geometry (for example, pedestal cross-sectional shape, average pedestal width, or average pedestal wall thickness). The at least one other pedestal of plurality of pedestals 12 may define a cross-section having a circular, ellipsoidal, curved, or polygonal edge or edge segment. While plurality of pedestals 12 may have one or both of flat surfaces or sharp edges as shown in FIG. 1C, in other examples, plurality of pedestals 12 may define one or both of curved surfaces or rounded edges.

In some examples, an average inter-pedestal distance of plurality of pedestals 12 is at least 50%, at least 100%, at least 200%, at least 300%, at least 400%, at least 500%, or at least 1000%, of an average pedestal width (e.g., of a maximum width across the pedestal, along one or both of radial axis R or circumferential axis C). In some examples, the average inter-pedestal distance of plurality of plurality of pedestals 12 is less than or equal to 10,000%, less than or equal to 5,000%, or less than or equal to 1,000%, of the average pedestal width. The inter-pedestal distance may be sufficiently high to provide sufficient mechanical support to substantially uniformly space apart inner wall 14 from outer wall 16, and sufficiently low to reduce heat transfer through plurality of pedestals 12.

In some examples, the average inter-pedestal distance of plurality of pedestals 12 is at least 10%, at least 20%, at least 30%, at least 40%, at least 50%, at least 60%, at least 70%, at least 80%, at least 90%, at least 100%, at least 120%, at least 150%, or at least 200%, of the maximum thickness of at least one heat shield segment 18 (e.g., a wall-to-wall spacing between a radially innermost surface of inner wall 14 and a radially outermost surface of outer wall 16). In some examples, the average inter-pedestal distance of plurality of pedestals 12 is less than or equal to 200%, less than or equal to 150%, less than or equal to 100%, less than or equal to 90%, less than or equal to 80%, less than or equal to 70%, less than or equal to 60%, less than or equal to 50%, less than or equal to 40%, less than or equal to 30%, less than or equal to 20%, or less than or equal to 10%, of the maximum thickness of at least one heat shield segment 18.

In some examples, an average pedestal width of plurality of pedestals 12 is at least 10%, at least 20%, at least 30%, at least 40%, at least 50%, at least 60%, at least 70%, at least 80%, at least 90%, at least 100%, at least 120%, at least 150%, or at least 200%, of the maximum thickness of at least one heat shield segment 18. In some examples, the average pedestal width of plurality of pedestals 12 is less than or equal to 200%, less than or equal to 150%, less than or equal to 100%, less than or equal to 90%, less than or equal to 80%, less than or equal to 70%, less than or equal to 60%, less than or equal to 50%, less than or equal to 40%, less than or equal to 30%, less than or equal to 20%, or less than or equal to 10%, of the maximum thickness of at least one heat shield segment 18.

Plurality of pedestals 12 may have any suitable height (e.g., along longitudinal direction L). In some examples, the average height of a respective pedestal of plurality of pedestals 12 is at least 10%, at least 20%, at least 30%, at least 40%, at least 50%, at least 60%, at least 70%, at least 80%, at least 90%, at least 100%, at least 120%, at least 150%, or at least 200%, of the maximum thickness of at least one heat shield segment 18, or of the maximum width of the respective pedestal. In some examples, the average height of a respective pedestal of plurality of pedestals 12 is less than or equal to 200%, less than or equal to 150%, less than or equal to 100%, less than or equal to 90%, less than or equal to 80%, less than or equal to 70%, less than or equal to 60%, less than or equal to 50%, less than or equal to 40%, less than or equal to 30%, less than or equal to 20%, or less than or equal to 10%, of the maximum thickness of at least one heat shield segment 18, or of the maximum width of the respective pedestal.

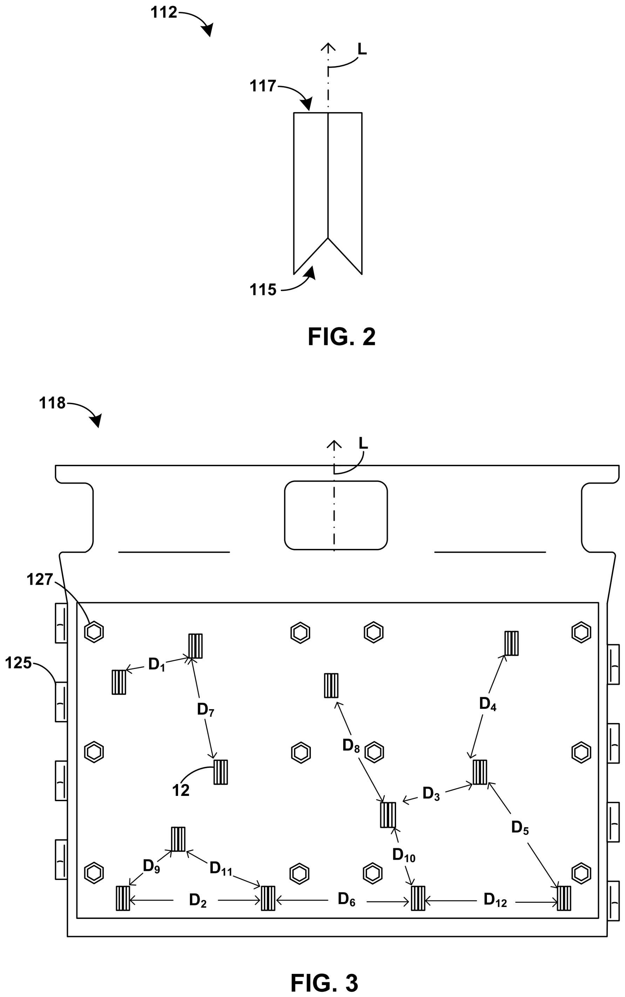

FIG. 2 is a side view of an example pedestal 112 including a notched end 115. Example pedestal 112 may be generally similar to a pedestal of plurality of pedestals 12 described with reference to FIGS. 1A to 1C, but differing in the presence of a notched end 115. For example, pedestal 112 may extend longitudinally between notched end 115 and opposing end 117. The opposing end 117 may be a flat end or another notched end. Notched end 115 may define a curved or angular notch.

FIG. 3 is a front view of an example heat shield segment 118 including a plurality of hinges 125. Heat shield segment 118 may be generally similar to heat shield heat shield segment 18 described with reference to FIG. 1A, and include plurality of pedestals 12 between an inner wall and an outer wall (similar to inner wall 14 and outer wall 16 described with reference to FIG. 1A). In some examples, heat shield 118 defines plurality of hinges 125. For example, plurality of hinges 125 may extend smoothly, continuously, or integrally from heat shield 118. In some examples, plurality of hinges 125 integrally extending laterally from one or both of the inner wall or the outer wall.

Plurality of hinges 125 may include any suitable number of hinges. As shown in FIG. 3, plurality of hinges 125 may alternate along opposing lateral edges of heat shield segment 118, so that hinges of adjacent heat shield segments 118 can align and interface. When respective hinges of pairs of adjacent heat shield segments are aligned along neighboring edges (e.g., similar to heat shield segment 118), one or more hinge pins may be introduced into the hinges to couple the heat shield segments to each other. Using plurality of hinges 125 to couple heat shield segments may facilitate relatively simple assembly (e.g., without requiring welding), and may allow disassembly for inspection, maintenance, and repair of individual heat shield segments of a wheel heat shield including plurality of heat shield segments 118.

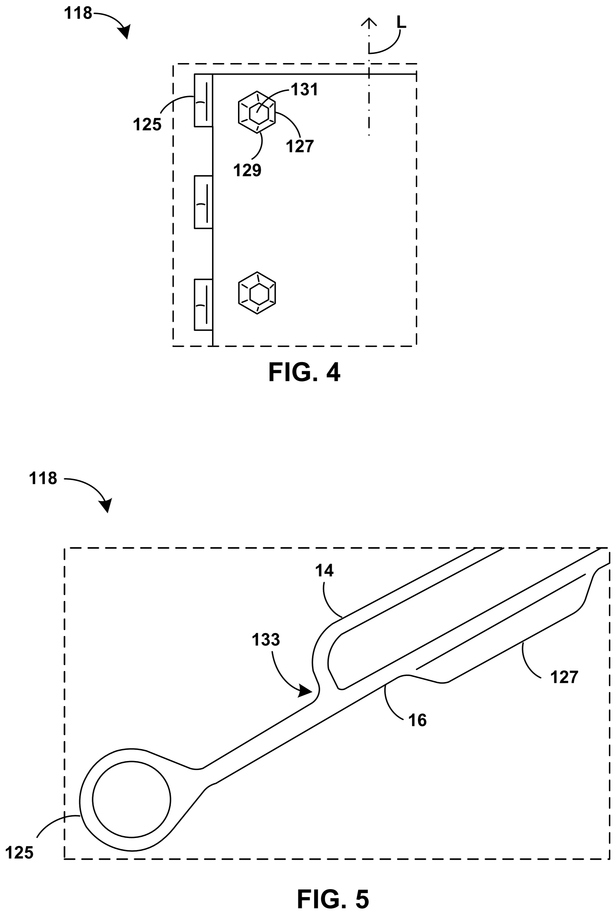

In the example of FIG. 3, plurality of pedestals 12 include twin pedestal pairs spaced at predetermined distances from each other. For example, distance D₁ may be about 45 mm, distance D₂ may be about 76 mm, distance D₃ may be about 50 mm, distance D₄ may be about 61 mm, distance D₅ may be about 74 mm, distance D₆ may be about 78 mm, distance D₇ may be about 59 mm, distance D₈ may be about 63 mm, distance D₉ may be about 39 mm, distance D₁₀ may be about 39 mm, distance D₁₁ may be about 51 mm, and distance D₁₂ may be about 77 mm. These distances may vary in a range of from ±20%, ±10%, ±5%, or ±1%. Heat shield segment 118 may further include a plurality of embossed bosses 127, as described with reference to FIG. 4.

FIG. 4 is a partial front view of heat shield segment 118 including plurality of embossed bosses 127. One or both of an inner wall or an outer wall of heat shield segment 118 may define plurality of embossed bosses 127. Plurality of embossed bosses 127 may be formed by stamping, molding, forming, additive manufacturing, or any other suitable technique. Plurality of embossed bosses 127 may continuously, smoothly, or integrally extend from heat shield segment 118.

Respective embossed bosses of plurality of embossed bosses 127 may differ from one another or be identical to each other in one or both of size or shape. A respective boss of plurality of embossed bosses 127 may have any suitable shape or contour. In some examples, at least one boss, or each boss, of plurality of embossed bosses 127 defines a hexagonal periphery 129, as seen in FIG. 4. In such examples, at least one boss may extend from hexagonal periphery 129 to a hexagonal face 131. Hexagonal face 131 may be outset from (projecting radially outward) hexagonal periphery 129, or may be inset into (projecting radially inward) hexagonal periphery 129. However, periphery 129 and/or face 131 may have any suitable contour or shape, including circular, ellipsoidal, curved, polygonal, or combinations thereof. Further, the general shape of periphery 129 may be similar to that of face 131 or differ from that of face 131.

Plurality of embossed bosses 127 may be arranged along heat shield segment 118 in any suitable pattern similar to or different from that described with reference to plurality of pedestals 12. In some examples, plurality of embossed bosses 127 is interleaved with plurality of pedestals 12.

In some examples, an average inter-boss distance of plurality of embossed bosses 127 is at least 50%, at least 100%, at least 200%, at least 300%, at least 400%, at least 500%, or at least 1000%, of an average boss width (e.g., of a maximum width across the boss, along one or both of radial axis R or circumferential axis C). In some examples, the average inter-boss distance of plurality of plurality of embossed bosses 127 is less than or equal to 10,000%, less than or equal to 5,000%, or less than or equal to 1,000%, of the average boss width. The inter-boss distance may be sufficiently high to provide support against other components or parts, or against other heat shield segments 118 stacked during manufacturing, storage, or transport.

In some examples, the average inter-boss distance of plurality of embossed bosses 127 is at least 10%, at least 20%, at least 30%, at least 40%, at least 50%, at least 60%, at least 70%, at least 80%, at least 90%, at least 100%, at least 120%, at least 150%, or at least 200%, of the maximum thickness of at least one heat shield segment 118 (e.g., a wall-to-wall spacing between a radially innermost surface of the inner wall 14 and a radially outermost surface of the outer wall). In some examples, the average inter-boss distance of plurality of embossed bosses 127 is less than or equal to 200%, less than or equal to 150%, less than or equal to 100%, less than or equal to 90%, less than or equal to 80%, less than or equal to 70%, less than or equal to 60%, less than or equal to 50%, less than or equal to 40%, less than or equal to 30%, less than or equal to 20%, or less than or equal to 10%, of the maximum thickness of at least one heat shield segment 118.

In some examples, the average boss width of plurality of embossed bosses 127 is at least 10%, at least 20%, at least 30%, at least 40%, at least 50%, at least 60%, at least 70%, at least 80%, at least 90%, at least 100%, at least 120%, at least 150%, or at least 200%, of the maximum thickness of at least one heat shield segment 118. In some examples, the average boss width of plurality of embossed bosses 127 is less than or equal to 200%, less than or equal to 150%, less than or equal to 100%, less than or equal to 90%, less than or equal to 80%, less than or equal to 70%, less than or equal to 60%, less than or equal to 50%, less than or equal to 40%, less than or equal to 30%, less than or equal to 20%, or less than or equal to 10%, of the maximum thickness of at least one heat shield segment 118.

Plurality of embossed bosses 127 may have any suitable height (e.g., along radial direction R). In some examples, the average height of a respective boss of plurality of embossed bosses 127 is at least 10%, at least 20%, at least 30%, at least 40%, at least 50%, at least 60%, at least 70%, at least 80%, at least 90%, at least 100%, at least 120%, at least 150%, or at least 200%, of the maximum thickness of at least one heat shield segment 118, or of the maximum width of the respective embossed boss. In some examples, the average height of a respective embossed boss of plurality of embossed bosses 127 is less than or equal to 200%, less than or equal to 150%, less than or equal to 100%, less than or equal to 90%, less than or equal to 80%, less than or equal to 70%, less than or equal to 60%, less than or equal to 50%, less than or equal to 40%, less than or equal to 30%, less than or equal to 20%, or less than or equal to 10%, of the maximum thickness of at least one heat shield segment 118, or of the maximum width of the respective embossed boss.

FIG. 5 is a partial top view of heat shield segment 118 including a fileted transition 133. For example, outer wall 16 may smoothly merge with inner wall 14 at fileted transition 133. Fileted transition 133 may have any suitable curve or contour. Likewise, hinge 125 or embossed boss 127 may also exhibit respective fileted transitions, for example, from a neighboring surface.

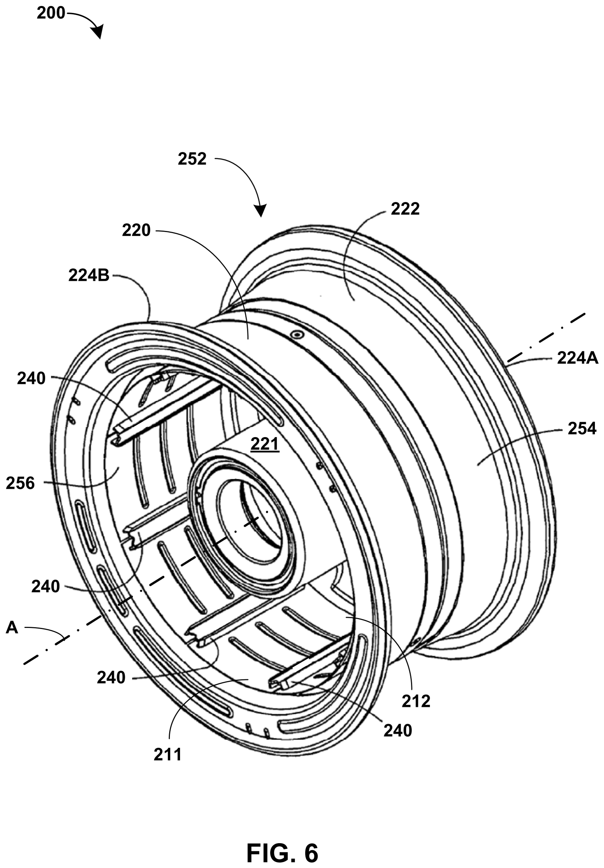

Wheel heat shields or heat shield segments according to the present disclosure may be installed or used with any wheel or wheel assembly, for example, those described with reference to FIGS. 6 or 7.

FIG. 6 is a perspective view of an example wheel 200 including a plurality of rotor drive keys 240 on an interior surface 256 of wheel 200. In some examples, wheel 200 is a part of an aircraft vehicle. In other examples, wheel 200 may be a part of any other vehicle, such as, for example, any marine vessel, land vehicle, or other vehicle. Wheel 200 may include a rim 252 defining an exterior surface 254 and interior surface 256. Rim 252 may include tubewell 220, wheel hub 221, and outboard tubewell 222. In some examples, interior surface 256 may include an inner diameter of tubewell 220. For example, in some cases, interior surface 256 may be referred to as an inner diameter surface of wheel 200.

In some examples, a tire (not shown) may be mounted on exterior surface 254 of rim 252. For example, wheel 200 may include an inboard bead seat 224B and an outboard bead seat 224A configured to retain a tire on exterior surface 254 of rim 252.

Wheel 200 is configured to engage with one or more rotors (not shown in FIG. 7) of a braking assembly. For example, as shown in the example of FIG. 6, a plurality of rotor drive keys 240 are attached to interior surface 256, and each rotor drive key of the plurality of rotor drive keys 240 may be configured to engage with one or more rotors of a brake disc stack of a braking assembly. An example braking assembly is described in more detail with respect to FIG. 7.

The plurality of rotor drive keys 240 extending in the substantially axial direction may enable wheel 200 to slide onto a braking assembly. For example, a plurality of rotors of a braking assembly may include drive slots configured to receive the plurality of rotor drive keys 240, enabling the plurality of rotor drive keys 240 to be slid into respective drive slots of the plurality of rotors. In other examples, one or more rotor drive keys of the plurality of rotor drive keys 240 may be oriented in a different direction and/or may engage with one or more rotors in a different manner.

As illustrated in the example of FIG. 7, in some examples, the plurality of rotor drive keys 240 may be mounted at substantially equal circumferential distances around interior surface 256 of wheel 200. In other examples, one or more of the plurality of rotor drive keys 240 may be mounted a different circumferential distance from an adjacent rotor drive than at least one other rotor drive key. Here and elsewhere, circumferential distance means the length of an arc on the interior surface 256 of wheel 200 where the arc is in a plane perpendicular to the substantially axial direction of wheel 200. Rotor drive keys 240 may be integrally formed with tubewell 220 or may be separate from and mechanically affixed to tubewell 220.

A wheel heat shield, for example, wheel heat shield 10, or a heat shield segment, for example, heat shield segment 18 or 118, or any other wheel heat shield or heat shield segment according to the disclosure, may be secured to wheel 200. In some examples, respective segments of wheel heat shield may be positioned between neighboring rotor drive keys of plurality of rotor drive keys 240.

FIG. 7 is a schematic cross-sectional view of an example wheel and brake assembly 315 including a wheel 300 and a braking assembly 358. Wheel and brake assembly 315 is shown and described to provide context to the example wheel heat shields described in the present disclosure. The wheel heat shields described in the present disclosure, however, may be used with any suitable wheel and brake assembly in other examples.

Wheel 300 includes tubewell 320, wheel hub 321, outboard tubewell 322, outboard bead seat 324A, and inboard bead seat 324B, rim 352, exterior surface 354, and interior surface 356, which may be configured individually and in relation to each other in the same manner as that discussed for the like-named components of wheel 200 (FIG. 6). Wheel 300 may be configured to be rotatably carried on axle 318. For example, wheel 300 may be rotatably carried on axle 318 by wheel hub 321. In turn, wheel 300 may impart motion to a vehicle including or mounted on the wheel and brake assembly 315. In the example shown in FIG. 7, tubewell 320 and outboard tubewell 322 are mechanically coupled by lug bolt 326 and lug nut 328. Other connection techniques may be used in other examples.

Braking assembly 358 includes an actuator assembly 314 and a brake stack 316. Actuator assembly 314 includes actuator housing 330, actuator housing bolt 332, and piston 334. Brake stack 316 includes a plurality of brake discs, which include interleaved rotor brake discs 336 and stator brake discs 338. Rotor brake discs 336 are configured to move relative to stator brake discs 338, e.g., rotationally about axis A and axially along axis A relative to stator brake discs 338. Rotor brake discs 336 engage with wheel 300, and in particular tubewell 320, by rotor drive keys 340. Stator brake discs 338 are mounted to torque tube 342 by splines 344. Wheel and brake assembly 315 may support any variety of private, commercial, or military aircraft or other type of vehicle.

Wheel and brake assembly 315 may be mounted to a vehicle via axle 318. Torque tube 342 supports actuator assembly 314 and stator brake discs 338. Axle 318 may be mounted on a strut of a landing gear (not shown) or other suitable component of the vehicle to connect wheel and braking assembly 315 to the vehicle.

During operation of the vehicle, braking may be necessary from time to time, such as during landing and taxiing procedures of an aircraft. Wheel and brake assembly 315 is configured to provide a braking function to the vehicle via actuator assembly 314 and brake stack 316. Actuator assembly 314 includes actuator housing 330 and piston 334. Actuator assembly 314 may include different types of actuators such as one or more of, e.g., an electrical-mechanical actuator, a hydraulic actuator, a pneumatic actuator, or the like. During operation, piston 334 may extend away from actuator housing 330 to axially compress brake stack 316 against compression region 348 for braking.

Rotor brake discs 336 are slidably engaged with rotor drive keys 340 for common rotation with tubewell 320 and rotor drive keys 340. Stator brake discs 338 are mounted to torque tube 342 by splines 344. In the example of FIG. 7, brake stack 316 includes four rotors and five stators. However, a different number of rotors and/or stators may be included in brake stack 316 in other examples. Rotor brake discs 336 and stator brake discs 338 may provide opposing friction surfaces for braking an aircraft. In some examples, wheel and brake assembly 315 may include a wheel heat shield 310 between rotor brake discs 336 and tubewell 320 in order to, for example, limit thermal transfer between brake stack 316 and wheel 300. Wheel heat shield 310 may include any wheel heat shield or heat shield segment according to the present disclosure, for example, wheel heat shield 10, or heat shield segments 18 or 118.

In some examples, splines 344 may be circumferentially spaced about an outer portion of torque tube 342. Stator brake discs 338 may include a plurality of radially inwardly disposed lug notches along an inner diameter of the brake disc configured to engage with splines 344. Similarly, rotor brake discs 336 may include a plurality of radially inwardly disposed drive slots along an outer periphery (e.g., an outer diameter in the case of a disc having a circular cross-section) of the rotor brake disc. The drive slots may be configured to engage with rotor drive keys 340. As such, rotor brake discs 336 will rotate with the motion of wheel 300 while stator brake discs 338 remain stationary, allowing the friction surfaces of an adjacent stator brake disc 338 and rotor brake disc 336 to engage with one another to decelerate the rotation of wheel 300.

FIG. 8 is a block diagram illustrating an example system 400 for additively manufacturing a wheel heat shield. While system 400 is described as an example, wheel heat shields according to the present disclosure may be prepared using any other suitable systems. System 400 includes a computing device 410, a powder delivery device 420, an imaging device 430, an energy source 440, and a fabrication assembly 450.

Powder source 420 is configured to deliver a powder (or any other suitable form) of a heat-resistant material, for example, a metal or an alloy. The heat-resistant material may include a binder, for example, an organic or inorganic binder. Powder from powder source is transported to fabrication assembly 450, for example, over a platform 452. For example, powder source 420 may transfer powder via a roller, a wiper, or an arm to platform 452. Fabrication assembly 450 may include a build plate 454 configured to receive an initial layer of powder, and ultimately hold a component fabricated by deposition of powder. Imaging device 430 is configured to direct an energy beam (for example, a laser beam or an electron beam) from energy source 440 onto powder on build plate 454 based on a model, to form a layer of a plurality of layers.

Computing device 410 is configured to control components and operation of system 400 and may include, for example, a desktop computer, a laptop computer, a workstation, a server, a mainframe, a cloud computing system, or the like. Computing device 410 may be communicatively coupled to, and configured to control, powder source, imaging device 430, energy source 440, and fabrication assembly 450 using respective communication connections. System 400 may include one or more computing devices 410.

Computing device 410 is configured to control energy source 440, imaging device 430, and fabrication assembly 450 to selectively fuse powder, for example, by melting of powder or a binder component of the powder to form a patterned layer, based on the model. Computing device 410 may store the model in a memory of computing device 410. After a respective layer is formed, unfused powder may remain on build plate 454. The unfused powder may support subsequent layers. After each layer is completely formed, platform 452 is moved vertically, for example, away from the energy source, and additional powder deposited, so that the next layer may be formed via interaction of the energy beam and the powder. Ultimately, deposition of the entire plurality of layers results in formation of a component based on the model. Thus, system 400 may be used to fabricate a wheel heat shield or heat shield segment according to the present disclosure based on a model of the wheel heat shield.

Computing device 410 may implement the techniques described in the present disclosure at least in part, in hardware, software, firmware, or any combination thereof. For example, computing device 410 may include one or more processors. Various aspects of the described techniques may be implemented within the one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of the present disclosure.

Such hardware, software, and firmware may be implemented within the same device (e.g., computing device 410) or within separate devices to support the various techniques described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware, firmware, or software components. Rather, functionality associated with one or more modules or units may be performed by separate hardware, firmware, or software components, or integrated within common or separate hardware, firmware, or software components.

The techniques described in the present disclosure may also be embodied or encoded in an article of manufacture including a computer-readable storage medium encoded with instructions. For example, computing device 410 may read the computer-readable storage medium and one or more processors of computing device 410 may execute the instructions. Instructions embedded or encoded in an article of manufacture including a computer-readable storage medium encoded, may cause one or more programmable processors, or other processors, to implement one or more of the techniques described herein, such as when instructions included or encoded in the computer-readable storage medium are executed by the one or more processors. Computer readable storage media may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

In some examples, the computer-readable storage medium includes a non-transitory medium. The term "non-transitory" may indicate that the storage medium is not embodied in a carrier wave or a propagated signal. In certain examples, a non-transitory storage medium stores data that can, over time, change (e.g., in RAM or cache).

While wheel heat shields according to the present disclosure may be formed using powder bed additive systems, any other suitable additive manufacturing technique may be used, for example, bound powder extrusion, or non-powder based additive manufacturing techniques.

FIG. 9 is a flow diagram illustrating an example technique for forming a wheel heat shield. While techniques according to FIG. 9 are described with reference to wheel heat shield 10 of FIG. 1A formed using system 400 of FIG. 8, the techniques may be implemented using any suitable system to form any wheel heat shield according to the present disclosure. Further, any suitable technique may be used to form wheel heat shields according to the present disclosure.

The technique may include additively depositing a heat-resistant material to form wheel heat shield 10 (502). Wheel heat shield 10 includes inner wall 14 extending along longitudinal axis L of wheel heat shield 10, outer wall 16 radially spaced from inner wall 14, and plurality of pedestals 12 extending radially between inner wall 14 and outer wall 16. At least one pedestal of the plurality of pedestals 12 defines a cruciform cross-section along plane P transverse to longitudinal axis L.

For example, the additively depositing (502) may include powder bed deposition of the heat-resistant material. In some examples, computing device 410 of system 400 may store the model corresponding to wheel heat shield 10 or heat shield segment 18 or 118 in the memory of computing device 410, and computing device 410 may control powder source 420, imaging device 430, energy source 440, and fabrication assembly 450 to fabricate wheel heat shield 10 or heat shield segment 18 or 118 on build plate 454 based on the model.

The technique may further include thermal processing of wheel heat shield 10 (504). For example, wheel heat shield 10 may be heated, tempered, sintered, or annealed. In some examples, the thermal processing may strengthen wheel heat shield 10.

In some examples, the technique may further include assembling a plurality of heat shield segments 18 or 118 into a single wheel heat shield. For example, multiple heat shield segments 18 or 118 may be joined by one or more of clips, pins, fasteners, or hinges to form an assembled wheel heat shield.

The technique may further include securing wheel heat shield 10 to an interior surface of a wheel (456). For example, the wheel may define a rim configured to receive a tire, as described with reference to FIGS. 6 and 7. In some examples, multiple heat shield segments 18 or 118 are individually secured to the wheel. In other examples, multiple heat shield segments 18 or 118 are joined to each other to form an assembled wheel heat shield, followed by securing the assembled wheel heat shield to the wheel.

After installation and/or use, heat shield segments 18 or 118 may be removed and replaced from the wheel, for example, for maintenance or repair.

The following clauses illustrate example subject matter described herein.

Clause 1: A wheel heat shield including: an inner wall extending along a longitudinal axis of the wheel heat shield; an outer wall radially spaced from the inner wall; and a plurality of pedestals extending radially between the inner wall and the outer wall, where at least one pedestal of the plurality of pedestals defines a cruciform cross-section along a plane transverse to the longitudinal direction.

Clause 2: The wheel heat shield of clause 1, where the at least one pedestal extends longitudinally in a direction parallel to the longitudinal axis of the inner wall.

Clause 3: The wheel heat shield of clauses 1 or 2, where the plurality of pedestals includes a twin pedestal pair including the at least one pedestal.

Clause 4: The wheel heat shield of any of clauses 1 to 3, where the at least one pedestal of the plurality of pedestals includes a metal or an alloy.

Clause 5: The wheel heat shield of any of clauses 1 to 4, where the at least one pedestal of the plurality of pedestals defines a notched pedestal end.

Clause 6: The wheel heat shield of any of clauses 1 to 5, where each pedestal of the plurality of pedestals is identical to the at least one pedestal.

Clause 7: The wheel heat shield of any of clauses 1 to 6, where the plurality of pedestals is staggered along the inner wall.

Clause 8: The wheel heat shield of any of clauses 1 to 7, further including a plurality of heat shield segments, each heat shield segment of the plurality of heat shield segments defining a plurality of hinges integrally extending laterally from one or both of the inner wall or the outer wall.

Clause 9: The wheel heat shield of clause 8, each heat shield segment of the plurality of heat shield segments includes a unitary body.

Clause 10: The wheel heat shield of any of clauses 1 to 9, where one or both of the inner wall or the outer wall defines a plurality of embossed bosses.

Clause 11: The wheel heat shield of clause 10, where each boss of the plurality of embossed bosses defines a hexagonal periphery.

Clause 12: The wheel heat shield of any of clauses 1 to 11, including an additively manufactured shield body integrally defining the inner wall, the outer wall, and the plurality of pedestals.

Clause 13: The wheel heat shield of clause 12, where the additively manufactured shield body includes a metal or an alloy.

Clause 14: An assembly including: a wheel defining an interior surface and an exterior rim configured to receive a tire; and a wheel heat shield secured to the interior surface, where the wheel heat shield includes: an inner wall extending along a longitudinal axis of the wheel heat shield; an outer wall radially spaced from the inner wall; and a plurality of pedestals extending radially between the inner wall and the outer wall, where at least one pedestal of the plurality of pedestals defines a cruciform cross-section along a plane transverse to the longitudinal axis.

Clause 15: The assembly of clause 14, further including a brake assembly, where the wheel heat shield is between the brake assembly and the interior surface.

Clause 16: The assembly of clauses 14 or 15, where the at least one segment of the wheel heat shield further includes: a radially inner layer defining the radially inner surface and a radially outer layer defining the radially outer surface; and a plurality of pedestals extending between and spacing apart the radially inner layer and the radially outer layer.

Clause 17: The assembly of any of clauses 14 to 16, where the heat-resistant material includes at least one of additively deposited metal or alloy.

Clause 18: A method including: additively depositing a heat-resistant material to form a wheel heat shield, where the wheel heat shield includes: an inner wall extending along a longitudinal axis of the wheel heat shield; an outer wall radially spaced from the inner wall; and a plurality of pedestals extending radially between the inner wall and the outer wall, where at least one pedestal of the plurality of pedestals defines a cruciform cross-section along a plane transverse to the longitudinal axis.

Clause 19: The method of clause 18, where the additively depositing includes powder bed deposition of the heat-resistant material.

Clause 20: The method of clauses 18 or 19, further including securing the wheel heat shield to an interior surface of a wheel, the wheel defining a rim configured to receive a tire.

Various examples have been described. These and other examples are within the scope of the following claims.

## Claims

1. A wheel heat shield comprising:
an inner wall extending along a longitudinal axis of the wheel heat shield;
an outer wall radially spaced from the inner wall; and
a plurality of pedestals extending radially between the inner wall and the outer wall,
wherein at least one pedestal of the plurality of pedestals defines a cruciform cross-section along a plane transverse to the longitudinal direction.

2. The wheel heat shield of claim 1, wherein the at least one pedestal extends longitudinally in a direction parallel to the longitudinal axis of the inner wall.

3. The wheel heat shield of claim 1 or 2, wherein the plurality of pedestals comprises a twin pedestal pair comprising the at least one pedestal.

4. The wheel heat shield of any one of claims 1 to 3, wherein the at least one pedestal of the plurality of pedestals comprises a metal or an alloy.

5. The wheel heat shield of any one of claims 1 to 4, wherein the at least one pedestal of the plurality of pedestals defines a notched pedestal end.

6. The wheel heat shield of any one of claims 1 to 5, wherein each pedestal of the plurality of pedestals is identical to the at least one pedestal.

7. The wheel heat shield of any one of claims 1 to 6, wherein the plurality of pedestals is staggered along the inner wall.

8. The wheel heat shield of any one of claims 1 to 7, further comprising a plurality of heat shield segments, each heat shield segment of the plurality of heat shield segments defining a plurality of hinges integrally extending laterally from one or both of the inner wall or the outer wall.

9. The wheel heat shield of claim 8, each heat shield segment of the plurality of heat shield segments comprises a unitary body.

10. The wheel heat shield of any one of claims 1 to 9, wherein one or both of the inner wall or the outer wall defines a plurality of embossed bosses.

11. The wheel heat shield of claim 10, wherein each boss of the plurality of embossed bosses defines a hexagonal periphery.

12. The wheel heat shield of any one of claims 1 to 11, comprising an additively manufactured shield body integrally defining the inner wall, the outer wall, and the plurality of pedestals.

13. The wheel heat shield of claim 12, wherein the additively manufactured shield body comprises a metal or an alloy.

14. An assembly comprising:
a wheel defining an interior surface and an exterior rim configured to receive a tire; and
the wheel heat shield of any one of claims 1 to 13 secured to the interior surface.

15. A method comprising:
additively depositing a heat-resistant material to form the wheel heat shield of any one of claims 1 to 13.
